Europäisches Patentamt

European Patent Office

Office européen des brevets

(19)

(11) Veröffentlichungsnummer: **0 075 072**
**A1**

(12) # EUROPÄISCHE PATENTANMELDUNG

(21) Anmeldenummer: 82104802.2

(22) Anmeldetag: 01.06.82

(51) Int. Cl.³: **F 16 J 12/00,** B 01 J 3/00,
B 01 J 3/04

(30) Priorität: 17.09.81 DE 3136952

(43) Veröffentlichungstag der Anmeldung: 30.03.83
Patentblatt 83/13

(84) Benannte Vertragsstaaten: AT BE CH DE FR GB IT LI NL
SE

(71) Anmelder: Görgens, Erich, Wittelsbachstrasse 51,
D-4000 Düsseldorf (DE)

(72) Erfinder: Görgens, Erich, Wittelsbachstrasse 51,
D-4000 Düsseldorf (DE)

(74) Vertreter: Patentanwaltsbüro Cohausz & Florack,
Postfach 14 01 47, D-4000 Düsseldorf 1 (DE)

(54) **Mehrschalige Wand.**

(57) Die Erfindung betrifft eine mehrschalige Wand zur
Trennung unterschiedlicher Drücke, Medien und/oder Temperaturen. Die Wandschalen (1a–1b) sind zueinander in
Abständen angeordnet, und in den Zwischenräumen herrschen zueinander unterschiedliche Drücke, Medien und/
oder Temperaturen.

EP 0 075 072 A1

# COHAUSZ & FLORACK
0075072

### PATENTANWALTSBÜRO

SCHUMANNSTR. 97 · D-4000 DÜSSELDORF

Telefon: (02 11) 68 33 46                    Telex: 0858 6513 cop d

PATENTANWALTE:

Dipl.-Ing. W. COHAUSZ   ·   Dipl.-Ing. R. KNAUF   ·   Dipl.-Ing. H. B. COHAUSZ   ·   Dipl.-Ing. D. H. WERNER

– 1 –                                     28.5.82

Erich Görgens

Wittelsbachstr. 51

4000 Düsseldorf

### Mehrschalige Wand

Die Erfindung betrifft eine mehrschalige Wand zur Trennung unterschiedlicher Drücke, Medien und/oder Temperaturen.

Es sind Wände von Druckbehältern bekannt, die aus mehreren Lagen Stahlblechbändern bestehen, die außen auf ein Kernrohr aufgewickelt sind. Die stirnseitigen Öffnungen eines solchen Behälters sind durch starkwandige Deckel abgeschlossen. Ferner sind Schalen-Druckbehälter bekannt, bei denen auf ein dünnwandiges Kernrohr Blechschalen mit einer Spannvorrichtung gelegt und längsgeschweißt sind. Die Flansche für starkwandige Deckelverschlüsse oder Böden sind angeschweißt. Solche mehrlagigen bzw. mehrschaligen Behälter sind aufwendig in der Herstellung, eignen sich nur für Behälter kleinerer Abmessungen und damit nicht für Tanks oder begehbare Behälter und können einem inneren Unterdruck nicht standhalten, da die einzelnen Schalen oder Schichten nach innen fallen können.

35 222 EU
HC/Be

Um einem höheren Außenwasserdruck auf dem Meeresgrund standhalten zu können, ist es bekannt, einen größeren begehbaren kugelförmigen Behälter aus einem Mantel aus Spezialstahl erheblicher Stärke bzw. Dicke zu formen. Die Herstellung einer solchen Kugel ist sehr aufwendig.

Ferner ist es bekannt, Hohlkörperwände in einer Sandwichbauweise herzustellen, wobei zwischen zwei dünnen Deckblechen Schaumstoff oder Waben als Sandwichkern befestigt, insbesondere verklebt oder verlötet sind. Solche Wände sind zwar sehr leicht, sind aber in der Herstellung aufwendig und halten sehr hohen Druckunterschieden nicht stand. Auch ist die Herstellung gekrümmter Teile kompliziert.

Schließlich ist es bekannt, Behälter innen mit einer zweiten Wand auszukleiden, die von der Außenwand getragen wird, um dem Innendruck standzuhalten. Solche Auskleidungen werden vorgenommen, um die Außenwand vor Korrosion und ähnlichen Beeinträchtigungen zu schützen. Auch kann durch eine solche Auskleidung das in dem Behälter gelagerte Gut vor dem Material der Außenwand geschützt werden. Dabei ist es auch bekannt, die Innenwand schwimmend anzuordnen, d.h. die Innenwand in einem Abstand zur Außenwand anzuordnen und den Zwischenraum unter den gleichen Druck wie im Behälterinnenraum zu setzen, so daß wiederum die Innenwand von der Außenwand über den Zwischendruck getragen wird. Die Außenwand muß damit dem gleichen Druck standhalten, der im Behälterinneren besteht, so daß Stärke und Festigkeit der Außenwand sich nach dem Innendruck richtet.

Aufgabe der Erfindung ist es, eine mehrschalige Wand zur Trennung zweier unterschiedlicher Drücke zu schaffen, deren Schalen aus einem so dünnen Material bestehen können, daß das Material preiswert ist und leicht bearbeitet werden kann. Insbesondere ist es Aufgabe der Erfindung, eine mehrschalige Wand zu schaffen, die bei preiswerter Herstellung sehr hohen Druckunterschieden standhält. Ferner sollen aus solchen Wänden hergestellte Behälter einem inneren Unterdruck standhalten können. Auch ist es Aufgabe der Erfindung, eine Vorrichtung zu schaffen, durch die bei sehr geringen Verlusten ein Fluid, insbesondere eine Flüssigkeit, erwärmbar oder kühlbar ist.

Diese Aufgaben werden erfindungsgemäß dadurch gelöst, daß die Wandschalen zueinander in Abständen angeordnet sind und in den Zwischenräumen zueinander unterschiedliche Drücke, Medien und/oder Temperaturen vorhanden sind.

Ferner können in den Zwischenräumen zwischen den Wandschalen Zwischendrücke herrschen, die zwischen den zu trennenden Drücken liegen, und die Zwischendrücke derart abnehmend abgestuft sein, daß der Zwischendruck in dem Zwischenraum, der dem hohen zu trennenden Druck am nächsten ist, der höchste der Zwischendrücke ist und der Zwischendruck in dem Zwischenraum, der dem niedrigen zu trennenden Druck am nächsten ist, der niedrigste der Zwischendrücke ist.

Bei einer solchen mehrschaligen Wand braucht jede Schale nur der Druckdifferenz zwischen den jeweils anliegenden Drücken standzuhalten, wobei die Druckdifferenz an den Außenseiten einer Schale nur den Bruchteil des Gesamtdifferenzdruckes beträgt, der an den beiden Außenseiten der Wand anliegt. Die einzelnen Schalen können aus verhältnismäßig dünnen, preiswerten und leicht zu verarbeitenden Materialien, insbesondere aus Blech, Kunststoffplatten oder Flächengebilden aus anderen Materialien bestehen, wobei hohe Druckdifferenzen nicht durch Erhöhung der Materialwiderstandskraft oder der Materialdicke aufgefangen werden müssen, sondern nur durch Vergrößerung der Anzahl der Schalen. Alle Schalen einer Wand oder eines Behälters können aus demselben Material gleicher Stärke bestehen, und die Widerstandskraft und Haltbarkeit der Gesamtwand, des gesamten Behälters als auch einzelner Wände und einzelner Wandschalen läßt sich sehr leicht durch Messung und Beobachtung der Zwischendrücke prüfen und überwachen.

Während schon die Dicke der einzelnen Wandschalen verhältnismäßig gering sein kann, kann die Breite der Zwischenräume bzw. der Abstand der einzelnen Wandschalen voneinander besonders klein sein, solange nur dafür gesorgt wird, daß das Druckmittel in den Zwischenräumen alle Bereiche des Zwischenraumes erreicht. Damit sind Wände herstellbar, die in ihrer Dicke bzw. Stärke nicht größer bauen als eine Wand aus vollem Material. Das Gewicht dieser Wände ist geringer als das von Wänden aus vollem Material, und das Herstellen von Krümmungen und Eckteilen ist besonders einfach. Es können Standardbleche oder -platten verwendet werden, die mit den üblichen Geräten leicht verarbeitbar, wie z.B. biegbar, stampfbar, schneidbar oder schweißbar sind.

Anschlußteile, wie Flansche, Mannlöcher, Bodenplatten, Deckel, Rohre oder Ventile können mit den üblichen Arbeitsverfahren, wie z.B. Schweißen oder Kleben an den Stirnseiten der Wände oder in Öffnungen dieser sicher befestigt werden. Aus diesen Wänden hergestellte Behälter genügen u.a. den Anforderungen von Reaktordruckgefäßen und Unterwasserbehältern. Sie lassen sich überall dort einsetzen, wo hohe Druckunterschiede aufgefangen werden müssen.

Die Wand ermöglicht es, ferner eine Vorrichtung zu schaffen, die bei einfachem konstruktivem Aufbau und einfacher Montage ein Fluid bei geringsten Energieverlusten erwärmt oder kühlt. Die Heiz- oder Kühlvorrichtung bzw. -element kann sehr klein sein, da durch die innere Fluidverbindung und/oder -kreisläufe die die Wärme oder Kälte abgebende Fläche sehr groß ist, so daß ein optimaler Übergang vom internen Fluid zum durchfließenden Fluid erzielt wird.

In einer vorteilhaften Ausgestaltung wird vorgeschlagen, daß die Abstufung der Zwischendrücke etwa der Stärke und/oder der Festigkeit der Wandschalen entspricht. Hierdurch wird das Material der einzelnen Schalen optimal genutzt.

Auch wird vorgeschlagen, daß innerhalb der Zwischenräume je zwei angrenzende Wandschalen miteinander durch stützende Überbrückungsteile verbunden sind. Solche Überbrückungsteile stören den stufenförmigen Aufbau und die Anlage der Zwischendrücke nicht und sorgen für einen gleichbleibenden exakten Abstand der Schalen voneinander und damit eine exakte Lage der Schalen oder der schalenförmigen Einzelbehälter zueinander.

Die Überbrückungsteile können von Vor- und/oder Rücksprüngen, insbesondere Ausformungen der Wandschalen gebildet sein. Hierdurch sind Befestigung und Anordnung einzelner zusätzlicher Überbrückungsteile nicht erforderlich, sondern sie werden von den Wandschalen selber ausgebildet. Vorzugsweise wird vorgeschlagen, daß die Überbrückungsteile regelmäßig angeordnet sind.

Die Überbrückungsteile können die Zwischenräume in Teilräume unterteilen. Dies hat den Vorteil, daß die Teilräume einzeln überwacht werden können und ferner in diesen Teilräumen unterschiedliche Materialien sein können. In dem Fall, in dem zumindest ein Teil der Überbrückungsteile Hohlkörper sind, ist die Wand von besonders geringem Gewicht. Dabei wird vorgeschlagen, daß mindestens eine der Wandschalen Hohlkörper aufweist oder von Hohlkörpern gebildet ist. Besonders preiswert sind die Hohlkörper dann herstellbar, wenn sie aus Rohren oder Hohlkugeln bestehen. Dabei können durch diese Rohre Flüssigkeiten oder Gase strömen, die zusätzliche Funktionen wahrnehmen können.

Ferner wird vorgeschlagen, daß die Belastungsfähigkeit (Stabilität) jeder Wandschale dem Differenzdruck der an der Wandschale anliegenden Drücke entspricht. Die Zwischendrücke können dadurch erzeugt werden, daß die Zwischenräume über Ventile mit einer Über- oder Unterdrücke erzeugenden Vorrichtung verbunden sind. Dabei kann die Vorrichtung die Über- und/oder Unterdrücke von dem außen an einer Wandseite anliegenden Druck beziehen.

Besonders einfach sind die Zwischendrücke dann aufbaubar als auch beständig aufrechthaltbar, wenn die Zwischenräume untereinander und/oder mit einem oder beiden Außenseitendrücken durch Ventile verbunden sind. Eine solche Anordnung von Ventilen sorgt auch dafür, daß sich die Zwischendrücke automatisch an die beiden Außendrücke ständig in den erforderlichen Druckstufen anpassen. Dabei können die Ventile Druckminderventile, Druckeinstellventile oder Überdruckventile sein, die direkt in den Schalen befestigt sind oder aber über ein Leitungsnetz mit den Zwischenräumen und den Außenseiten verbunden sind.

Zur Bildung von Anschlußvorrichtungen und anschließenden Teilen können die Wandschalen an den Rändern durch einen festen Körper miteinander verbunden sein.

Vorzugsweise wird vorgeschlagen, daß in den Zwischenräumen zur Bildung der Zwischendrücke ein Fluid, ein körniges oder perlförmiges Material, zueinander bewegliche Hohlkörper, Kugeln oder Rohre, ein plastisches oder elastisches Material oder ein Gemisch von zwei oder mehreren dieser angeordnet ist. Zur Erzeugung der Zwischendrücke als auch zur Veränderung der Zwischendrücke wird vorgeschlagen, daß die Hohlkörper, Hohlkugeln oder Rohre aus dehnbarem Material bestehen und an einer steuerbaren Druckquelle angeschlossen sind.

Eine besonders vorteilhafte Nutzung der erfindungsgemäßen Wände als auch von Behältern, die aus den erfindungsgemäßen Wänden bestehen, wird dadurch erreicht, wenn in den Fluids, Materialien und/oder Körpern, die in den Zwischenräumen sind, chemische oder physikalische Verfahren ablaufen. Hierdurch können die erfindungsgemäßen Wände als auch Behälter aus diesen Wänden u.a. zu folgenden Vorrichtungen und Geräten zusätzlich zur Behälterfunktion als auch allein verwendet werden, so daß die Zwischenräume den Vorteil haben, daß sie
zu zusätzlichen Funktionen verwendet werden können:
Wärmetauscher, Turbine, Kompressor, Hochdruckpresse,
Vakuumerzeuger, Verdichter, Diffusor,           Transmitter, Transformator, Modulator, Moderator, Analysator,
Generator, Rekuperator,           Absorber, Filter,
Verdampfer, Konverter, Simulator, Wärmepumpe, Isolator
und Ableitungen all dieser Funktionen.

Ausführungsbeispiele der Erfindung sind in den Zeichnungen dargestellt und werden im folgenden näher beschrieben. Es zeigen:

Fig. 1       einen Schnitt durch einen Wandabschnitt;

Fig. 2       einen senkrechten Schnitt durch einen
             Behälter mit Ventilgehäuse;

Fig. 3       einen senkrechten Schnitt durch einen
             Behälter mit Schleusen;

Fig. 4       einen senkrechten Schnitt durch einen
             Behälter mit Schleuse und Arbeitsaggregat,
             insbesondere zur Verwendung unter Wasser;

Fig. 5       einen Behälter nach Fig. 4 mit einem
             Außenanschluß in der Bodenplatte;

Fig. 6       einen Schnitt durch ein Wandteil mit Überbrückungsteilen aus vollem Material in den
             Zwischenräumen;

Fig. 7       Schnitte durch Wandteile mit Kugeln, Hohl-
und 8        körpern und/oder Rohren in den Zwischen-
             räumen;

0075072

- 9 -

| Fig. 9 | einen Schnitt durch ein Wandteil mit in den Zwischenräumen angeordneten Hohlkugeln oder Rohren, die untereinander verbunden sind; |
|---|---|
| Fig. 10 und 11 | Schnitte durch Wandteile, deren Schalen Hohlkörper, insbesondere Hohlkugeln oder Rohre bilden; |
| Fig. 12 | einen Schnitt durch ein Wandteil, das von aneinandergesetzten, im Querschnitt rautenförmigen Hohlkörpern oder Rohren gebildet ist; |
| Fig. 13 | einen Schnitt durch einen Wandabschnitt mit gefalteten Blechen als Schalen; |
| Fig. 14 | einen Schnitt durch einen Wandabschnitt mit gewellten Blechen als Schalen; |
| Fig. 15 | einen Schnitt durch einen kugelförmigen Behälter; |
| Fig. 16 | einen Schnitt durch einen kugelförmigen Behälter mit Schleusen und einem Differenzraum; |
| Fig. 17 | einen Schnitt durch einen kubusförmigen Behälter; |
| Fig. 18 | einen zylindrischen Behälter mit angesetztem Kegel und angeschlossenem Arbeitsaggregat; |

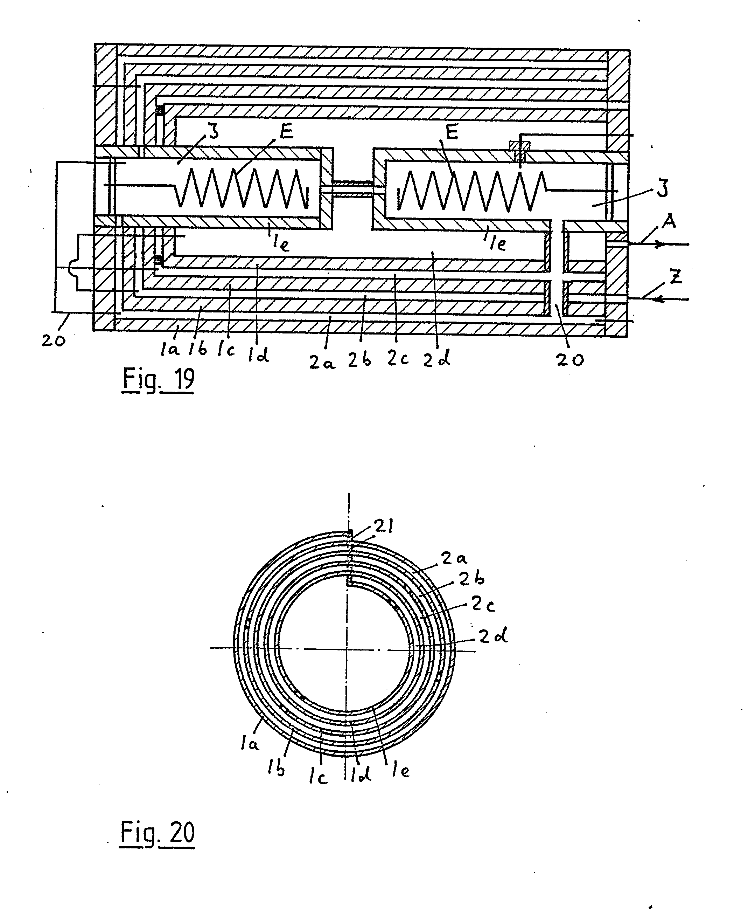

Fig. 19    einen Längsschnitt durch eine behälterförmige Erwärmungs- oder Kühlvorrichtung; und

Fig. 20    einen Querschnitt durch einen erfindungsgemäßen Behälter.

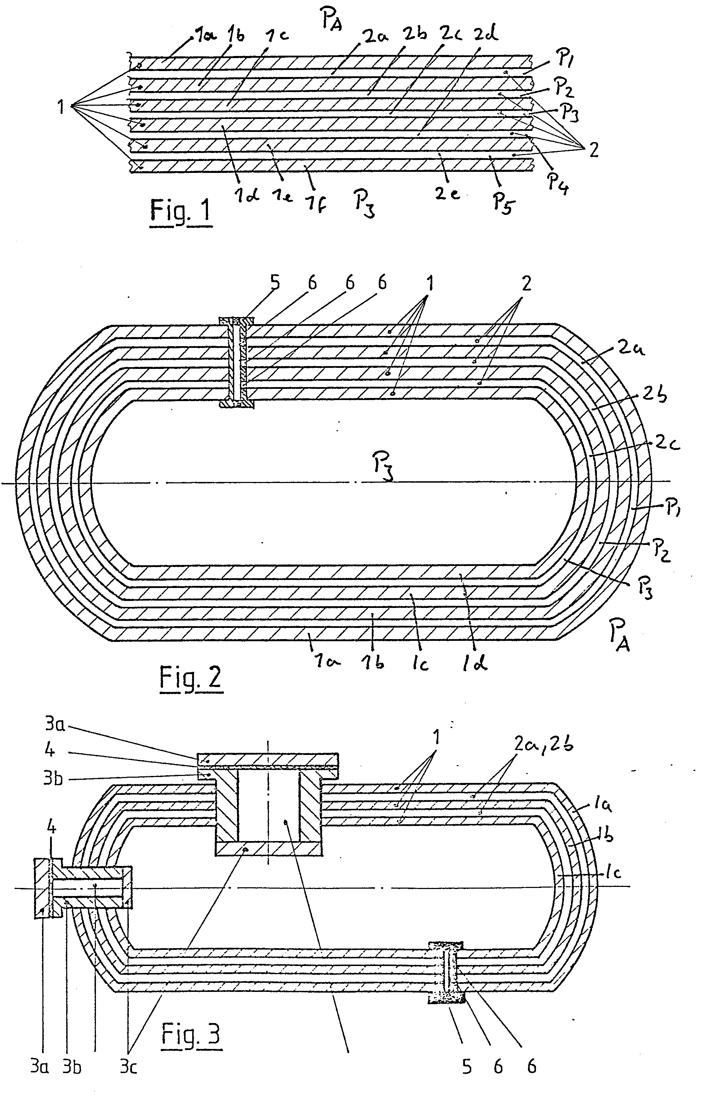

Der in Fig. 1 gezeigte Wandabschnitt besteht aus sechs Wandschalen 1a bis 1f, die die gleiche Stärke bzw. Dicke aufweisen und zueinander parallel jeweils in einem Abstand angeordnet sind. Der Abstand der Schalen zueinander kann im Gegensatz zur Zeichnung wesentlich geringer sein, d.h. jeder der Zwischenräume 2a bis 2e kann in seiner Breite wesentlich geringer sein als die Breite bzw. Dicke einer der Schalen. Die Zwischenräume brauchen nur so breit zu sein, daß ein darin befindliches Druckmittel an allen Stellen der Schalenoberflächen denselben Druck erzeugt. Bei einem Druckmittel geringer Viskosität kann der Zwischenraum eine Breite von Bruchteilen eines Millimeters besitzen.

Als Druckmittel kann jedes Mittel verwendet werden, das einen Druck gleichmäßig verteilt. Als fließendes Medium kann es ein Fluid, insbesondere ein Gas oder eine Flüssigkeit sein. Auch kommt ein fließfähiges körniges Material, wie auch Perlen oder Kugeln, in Frage. Ferner ist ein Gel, eine Gallerte, ein plastisches oder elastisches Material, wie Gummi oder weicher Kunststoff, brauchbar. Auch können Gemische aus zwei oder mehreren dieser verwendet werden.

Besteht in dem in Fig. 1 dargestellten Beispiel an der Wandaußenseite ein Außendruck von $P_A$ = 1 bar und an der

Wandinnenseite ein Druck $P_I$ von 13 bar, so steigen die Zwischendrücke $P_1$ bis $P_5$ in den Zwischenräumen 2a bis 2e stufenförmig von 3 bar über 5, 7, 9 auf 11 bar an, so daß jede der Schalen 1a bis 1f nur einem Differenzdruck von 2 bar standhalten muß. Obwohl die Wand eine Gesamtdruckdifferenz von 12 bar aufnehmen muß, können die einzelnen Schalen aus dünnem Material, insbesondere Blech gefertigt sein, das wesentlich leichter verarbeitbar ist als eine Wandplatte aus vollem Material.

Die einzelnen Wandschalen einer Wand können aus verschieden starken oder verschiedenartigen Materialien bestehen, so daß ihre Stabilität bzw. Belastungsfähigkeit unterschiedlich sein kann. In diesem Fall wird dafür gesorgt, daß die an der jeweiligen Schale anliegende Druckdifferenz der Stabilität dieser Schale entspricht, so daß die Druckabstufungen in den Zwischenräumen unterschiedlich sind. Ein sehr einfacher Aufbau der Druckstufen in den Zwischenräumen wird dadurch erreicht, daß in den einzelnen Schalen jeweils ein Druckminderventil angeordnet ist, das die beiden Außenseiten jeder Schale miteinander verbindet, so daß bei dem in Fig. 1 gezeigten Beispiel ein in der Schale 1f befindliches Ventil den Druck $P_I$ = 13 bar in einen Druck $P_5$ von 11 bar mindert. In gleicher Weise mindern nicht dargestellte Ventile in den Schalen 1a bis 1e die Drücke jeweils um 2 bar bis zum Außendruck von 1 bar. Alternativ können die Drücke den einzelnen Zwischenräumen auch über Leitungen zugeführt werden, wobei die Drücke und die Drucksteuerung durch eine Vorrichtung erzeugt werden kann, die innerhalb der Wand oder auf einer der beiden Seiten der Wand angeordnet ist. Bei

den in den Figuren 2, 3, 4, 5 und 15 bis 18 dargestellten Behältern ist ein Ventilgehäuse 5 in die Wand eingelassen, von dessen unter dem Außenüberdruck stehenden Innenraum Ventile 6 zu den Zwischenräumen führen.

Aus solchen mehrschaligen Wänden können die verschiedensten Behälterformen geschaffen werden, insbesondere Tanks, Unterwasserbehälter und Druckspeicher. Dabei ist es gleichgültig, ob im Behälterinnenraum ein Unterdruck oder ein Überdruck gehalten werden soll. Wichtig ist nur, daß die Drücke in den Zwischenräumen von der Überdruckseite aus zur Unterdruckseite hin stufenförmig um Beträge abnehmen, die von der Stabilität der Zwischenwände aufnehmbar sind. Dabei bilden die Zwischenräume Druckschalen, deren Druck stufenförmig ansteigt oder abfällt.

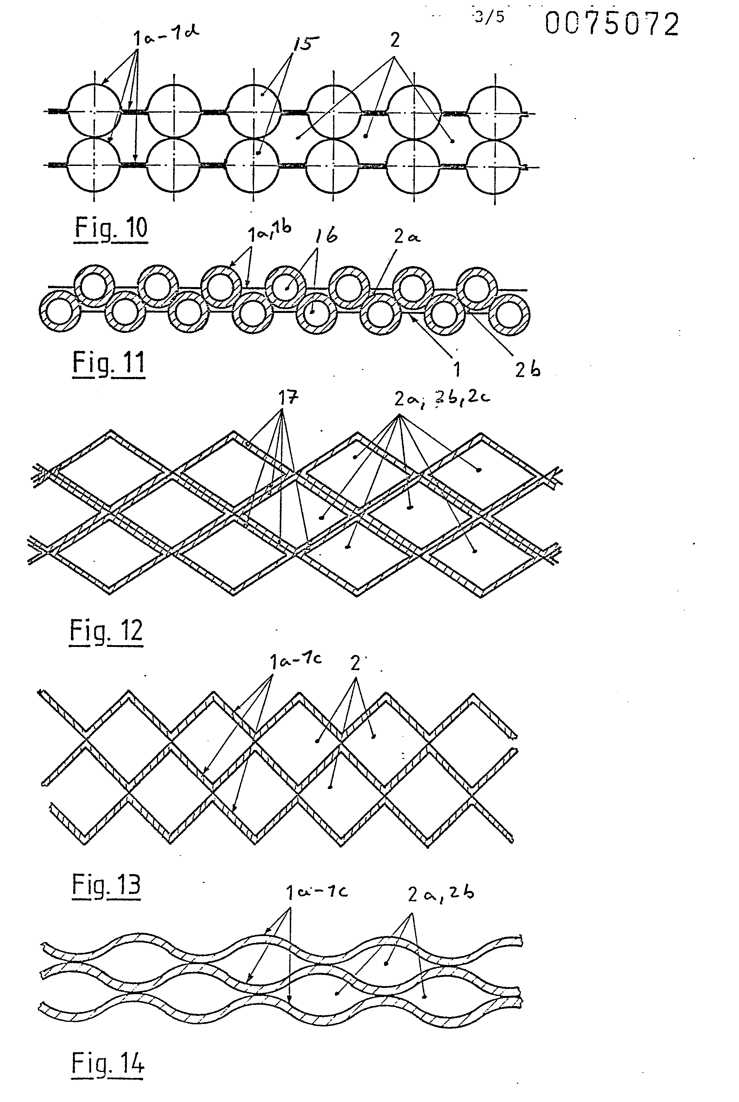

Die einzelnen Schalen müssen nicht eben sein, sondern können auch gewellt oder gefaltet ausgeführt sein (Fig. 13, 14). In dem Fall, in dem die Schalen einander berühren, ist dafür zu sorgen, daß abgetrennte Zwischenräume dem Druckmedium zugänglich sind. Auch können die Wände aus Hohlkörpern, insbesondere Rohren (Fig. 12) zusammengesetzt sein oder Rohre bilden (Fig. 10, 11). In dem Fall, in dem die Wand aus Rohren zusammengesetzt ist und zwischen den Rohren keine Zwischenräume bestehen, ist dafür zu sorgen, daß die Räume in den Rohren Drücke aufweisen, die zum niedrigen Druck hin stufenförmig abnehmen.

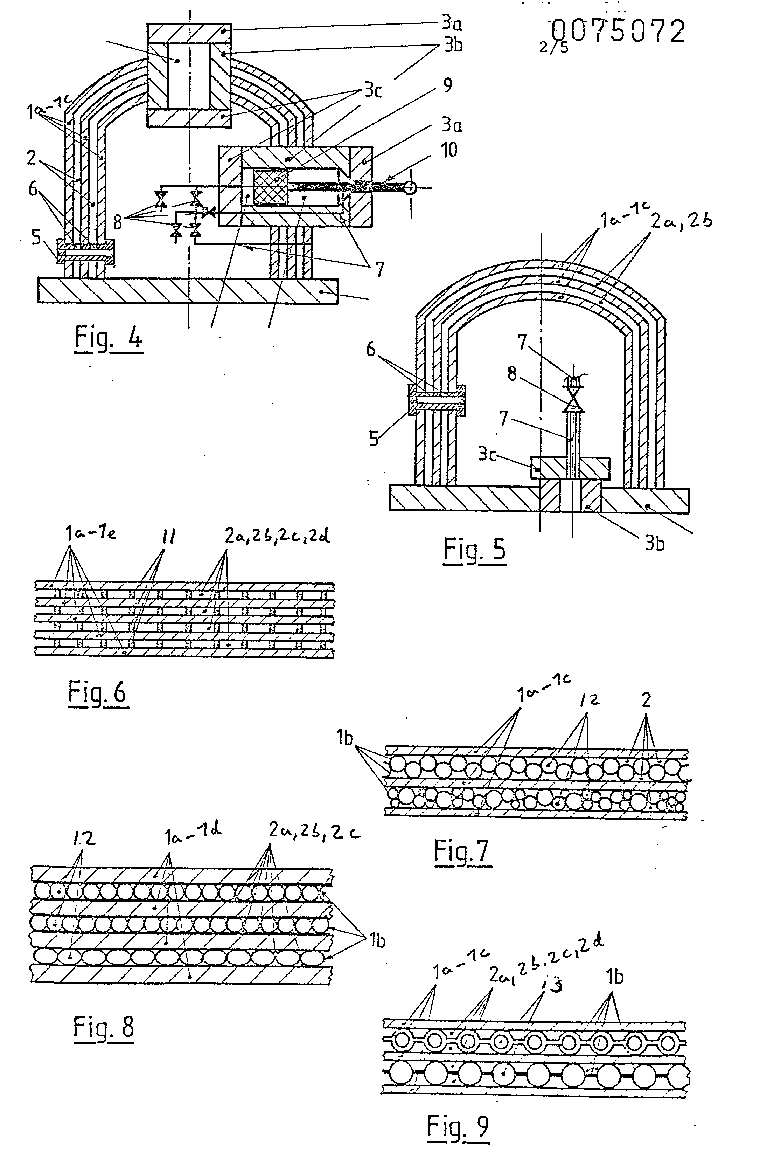

Die Wände können auch durch Vorrichtungen oder verschließbare Öffnungen unterbrochen sein, solange dafür gesorgt wird, daß in diesem Bereich mindestens die gleiche Stabilität erzeugt wird wie die Gesamtwand. Insbesondere können Schleusen 3a bis 3c Mannlöcher und Deckel oder Böden 20 als auch Leitungsdurchführungen 3b (Fig. 5) angeordnet sein. Die Druckdifferenz zwischen dem Innendruck $P_I$ und dem Außendruck $P_A$ kann auch durch ein Arbeitsaggregat 3a mit einem Kolben 10 genutzt werden, an dessen Kolbenraum über Leitungen 7 und Ventile 8 die Drücke angelegt sind. Ein solches Arbeitsaggregat ist zur Erzeugung von Kräften und zur Bedienung von Werkzeugen als auch Greifern insbesondere unter Wasser einsetzbar.

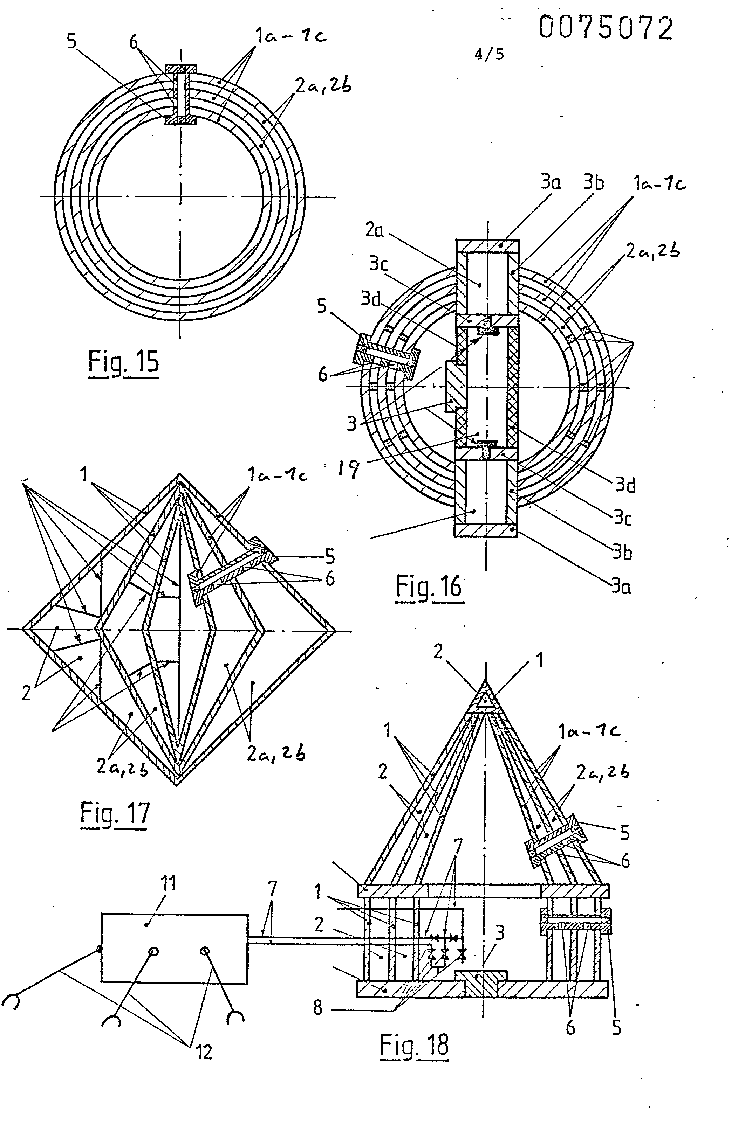

Während bei dem Beispiel nach Fig. 4 das Aggregat innerhalb der Wand angeordnet ist, befindet es sich bei dem Beispiel nach Fig. 18 außerhalb des Behälters bzw. Arbeitsraums. In Fig. 16 ist ein Behälter dargestellt, der innen einen Differenzraum 19 aufweist und über Schleusen 3a bis 3c mit unterschiedlichen Drücken beaufschlagt werden kann.

Zur Erhöhung der Stabilität der Wand und/oder um einen gleichmäßigen Abstand der Schalen 1 voneinander sicherzustellen, können in den Zwischenräumen 2 Überbrückungsteile 11 angeordnet sein, die an den Schalenoberflächen anliegen (Fig. 6). Die Überbrückungsteile können Klötze oder Profile aus vollem Material sein oder aber von Hohlkörpern, insbesondere Hohlkugeln oder Rohren 12 bis 14 gebildet sein (Fig. 8 bis 9). Diese Hohlkugeln oder Rohre können, wie in Fig. 9 gezeigt, untereinander verbunden sein und/oder einen Innendruck aufweisen, der ähnlich dem des Zwischenraums ist, in dem sich diese befinden. Alle bisher genannten Hohlkugeln oder Rohre können aus dehnbarem Material bestehen, um dadurch die Zwischenwände zu stützen oder Stabilität zu gewinnen.

Die Zwischenräume 2 und/oder die Schalen 1 der Wände können für chemische oder physikalische Verfahren genutzt werden. Dabei ist die Nutzung zur Kühlung, Erwärmung, als Wärmetauscher oder als Transformator besonders einfach und vorteilhaft.

Einer oder mehrere der Zwischenräume, hier 2b und 2d, die zwischen zwei anderen Räumen 2a, 2c, I, insbesondere Zwischenräumen, liegen, ist von einem ersten Fluid, insbesondere Wasser, durchströmt. Hierzu sind die miteinander verbundenen Räume 2b, 2d mit einer Zulauf- Z und einer Abflußleitung A verbunden, die z.B. Teil des Kreislaufes einer Zentralheizungsanlage oder eines Kühlraumes sind. In einem der anderen Zwischen- oder Innenräume, im Ausführungsbeispiel im Innenraum I, ist ein Heiz- oder Kühlelement E befestigt, das das Fluid, insbesondere Wasser, in diesem Innenraum erwärmt bzw. kühlt. Der Innenraum I ist über Leitungen oder Öffnungen 20 mit den übrigen Zwischenräumen verbunden, so daß das im Innenraum I befindliche Fluid, insbesondere Wasser, mit dem Fluid bzw. Wasser der übrigen Zwischenräume 2a, 2c ständig verbunden oder ausgetauscht wird. Es besteht somit ein interner Kreislauf des Fluids zwischen den Räumen I, 2a und 2c oder eine Wärmeleitung durch das Fluid, ohne es strömen zu lassen.

In dem Fall, in dem die Räume I, 2a und 2c als Fluid eine Flüssigkeit enthalten, ist mindestens einer dieser Räume nicht vollständig gefüllt, sondern weist einen oberen gasförmigen Bereich auf, der als Druckausgleich dient. Alternativ können an diese Räume auch nicht dargestellte Druckausgleichsgefäße und/oder Warmwasserspeicher angeschlossen sein. Der gesamte Behälter kann auf der Außenseite von dämmendem Material, insbesondere einem geschäumten Polystyrol, umgeben sein.

Bei der Erzeugung von Kälte können die Räume,insbesondere Zwischenräume des zweiten Fluids, Unterdruck aufweisen.

Aggregatzustände der Fluida können insbesondere durch Verdampfungsprozesse eingeleitet und durch Druck bzw. Temperatur, ebenso wie ihre Stoffeigenschaft, geregelt werden. Demnach ist ein Behälter nach dem Prinzip der mehrschaligen Wand geeignet zur Integration mehrerer Verfahrensstufen, bei gemeinsamer Nutzung der quasi einmal vorhandenen Parameter, etwa Druck und/oder Temperatur, und/oder Behälter.

So erzeugte Reaktion, Drücke oder Temperaturen können als Antriebskräfte und mehrschalige Behälter als Antriebsaggregate wie Dampfmaschinen, Turbinen, Fahrzeuge zu Land, zu Wasser oder in der Luft verwendet werden. Insbesondere unterwasser läßt sich dabei der hydrostatische Druck mit nutzen und etwa im Weltraum der luftleere Zustand. Vorteilhaft erscheint dies, wenn gemäß der Erfindung nach dem Prinzip der mehrschaligen Wand eine entsprechend günstige Energieumwandlung stattfindet, so daß bisherige Verluste weitestgehend ausgeschlossen bzw. kompensiert werden, d.h. es sind umweltfreundliche Energiesparmaßnahmen möglich.

Eine weitere Aufgabe der Erfindung besteht darin, bisher wenig belastbare Werkstoffe neuen Anwendungsgebieten zuzuführen. So können etwa druckführende Behältnisse aus dünneren Folien hergestellt, oder bisherige Anwendungsgrenzen können überschritten werden.

Mit geeigneten mehrschaligen Behältern gemäß der Erfindung kann die Beschaffung von Rohstoffen vom Meeresboden erleichtert und die Entsalzung des Meerwassers vorteilhafter gestaltet werden. Letzteres unter Nutzung der hydrostatischen Bedingungen in größeren Wassertiefen und insbesondere der Vorgehensweise nach Anspruch 19 bis 24 gemäß der Erfindung.

Kernkraftwerke könnten so in ihrem anlagentechnischen Umfang auf ein Minimum reduziert und in größeren Tiefen des Erdreiches, Wassers oder Weltraums vorteilhafter stationiert werden. Dabei würde mit zunehmender Anzahl der Zwischenräume bzw. Schalen der mehrschaligen Wand zunehmend mehr Sicherheit erreicht.

Bei fossilen Kraftwerken wäre ein einfacher Entzug von Schadstoffen im Rauchgas möglich, wenn diese in den jeweiligen Zwischenräumen entsprechenden Bedingungen unterworfen würden. Gleiches gilt für die chemische und petrochemische Industrie.

Sonderwerkstoffe brauchten gemäß der Erfindung nur noch bei der jeweiligen Kontaktschale relativ dünnwandig eingesetzt zu werden. Teure und aufwendige bzw. schwierige Schutzmaßnahmen lassen sich ebenfalls bei richtiger Anwendung der Erfindung vorteilhaft durchführen, etwa Strahlenschutzbunker unter Wasser.

Wie in Fig. 20 dargestellt, kann der Behälter auch aus einer einzigen Wand, insbesondere einem Blech, gewickelt sein, wobei wiederum die Wandungen aneinander nicht anliegen, sondern einen Abschnitt bilden. Die Behälterwandung ist damit im Querschnitt spiralförmig. Dabei sind die Zwischenräume 2a-d durch Längsleisten 21 voneinander getrennt.

## COHAUSZ & FLORACK

**PATENTANWALTSBÜRO**

**SCHUMANNSTR. 97 D-4000 DÜSSELDORF 1**

Telefon: (02 11) 68 33 46          Telex: 0858 6513 cop d

PATENTANWÄLTE:

Dipl.-Ing. W. COHAUSZ  ·  Dipl.-Ing. R. KNAUF  ·  Dipl.-Ing. H. B. COHAUSZ  ·  Dipl.-Ing. D. H. WERNER

0075072

- 17 -                                        28.5.82

## Ansprüche

1. Mehrschalige Wand zur Trennung unterschiedlicher Drücke, Medien und/oder Temperaturen, d a d u r c h   g e - k e n n z e i c h n e t , daß die Wandschalen (1a-1b) zueinander in Abständen angeordnet sind und in den Zwischenräumen zueinander unterschiedliche Drücke, Medien und/oder Temperaturen herrschen.

2. Wand nach Anspruch 1, d a d u r c h   g e k e n n - z e i c h n e t , daß in den Zwischenräumen (2a-2e) zwischen den Wandschalen Zwischendrücke ($P_1$-$P_5$) herrschen, die zwischen den zu trennenden Drücken ($P_A$ und $P_I$) liegen, und daß die Zwischendrücke ($P_1$-$P_5$) derart abnehmend abgestuft sind, daß der Zwischendruck ($P_5$) in dem Zwischenraum (2e), der dem hohen zu trennenden Druck ($P_I$) am nächsten ist, der höchste der Zwischendrücke ist und der Zwischendruck ($P_1$) in dem Zwischenraum (2a), der dem niedrigen zu trennenden Druck ($P_A$) am nächsten ist, der niedrigste der Zwischendrücke ist.

3. Wand nach Anspruch 2, d a d u r c h   g e k e n n - z e i c h n e t , daß die Abstufung der Zwischendrücke ($P_1$-$P_5$) etwa der Stärke und/oder der Festigkeit der Wandschalen (1a-1f) entspricht.

4. Wand nach Anspruch 1, 2 oder 3, d a d u r c h   g e - k e n n z e i c h n e t , daß die Wand einen Hohl-

35 222  EU
HC/Be

raum begrenzt, insbesondere einen Behälter bildet oder Teil eines Behälters ist, der einen Über- oder Unterdruck umschließt.

5. Wand nach einem der Ansprüche 1 bis 4, d a - d u r c h   g e k e n n z e i c h n e t , daß innerhalb der Zwischenräume (2a-2e) je zwei angrenzende Wandschalen (1a, 1b; 1b, 1c; 1c, 1d; 1d, 1e; 1e, 1f)) miteinander durch stützende Überbrückungsteile (11-16) verbunden sind.

6. Wand nach Anspruch 5, d a d u r c h   g e k e n n - z e i c h n e t , daß die Überbrückungsteile von Vor- und/oder Rücksprüngen, insbesondere Ausformungen (15) der Wandschalen (1a-1f) gebildet sind.

7. Wand nach Anspruch 5 oder 6, d a d u r c h   g e - k e n n z e i c h n e t , daß die Überbrückungsteile (11-16) regelmäßig angeordnet sind.

8. Wand nach einem der Ansprüche 5 bis 7, d a d u r c h g e k e n n z e i c h n e t , daß die Überbrückungsteile (11-16) die Zwischenräume (2a-2e) in Teilräume unterteilen.

9. Wand nach einem der Ansprüche 5 bis 8, d a d u r c h g e k e n n z e i c h n e t , daß zumindest ein Teil der Überbrückungsteile (12-16) Hohlkörper sind.

10. Wand nach einem der Ansprüche 1 bis 9, d a d u r c h g e k e n n z e i c h n e t , daß mindestens eine der Wandschalen Hohlkörper (15) aufweist oder von Hohlkörpern (17) gebildet ist.

11. Wand nach Anspruch 8 oder 9, d a d u r c h g e - k e n n z e i c h n e t , daß die Hohlkörper (12 bis 16) Rohre oder Hohlkugeln sind.

12. Wand nach einem der Ansprüche 1 bis 11, d a - d u r c h g e k e n n z e i c h n e t , daß die Belastungsfähigkeit (Stabilität) jeder Wandschale (1a-1f) mindestens dem Differenzdruck der an der Wandschale anliegenden Drücke entspricht.

13. Wand nach einem der Ansprüche 1 bis 12, d a - d u r c h g e k e n n z e i c h n e t , daß die Zwischenräume (2a-2e) über Ventile (6) oder durch Öffnungen mit einer über- oder Unterdrücke erzeugen- den Vorrichtung verbunden sind.

14. Wand nach einem der Ansprüche 1 bis 13, d a - d u r c h g e k e n n z e i c h n e t , daß die Vorrichtung die über- und/oder Unterdrücke von dem außen an einer Wandseite anliegenden Druck $(P_3)$ bezieht.

15. Wand nach einem der Ansprüche 1 bis 14, d a - d u r c h g e k e n n z e i c h n e t , daß die Zwischenräume (2a-2e) untereinander und/oder mit einem oder beiden Außenseitendrücken $(P_A - P_I)$ durch Ventile (6) verbunden sind.

16. Wand nach einem der Ansprüche 1 bis 15, d a - d u r c h g e k e n n z e i c h n e t , daß die Wandschalen (1a-1f) an den Rändern durch einen festen Körper (3a-3c) miteinander verbunden sind.

17. Wand nach einem der Ansprüche 1 bis 16 , d a - d u r c h   g e k e n n z e i c h n e t , daß in den Zwischenräumen (2a-2e) zur Bildung der Zwischendrücke ($P_1$-$P_5$) ein Fluid, ein körniges oder perlförmiges Material, zueinander bewegliche Hohlkörper, Kugeln oder Rohre, ein plastisches oder elastisches Material oder ein Gemisch von zwei oder mehreren dieser angeordnet ist.

18. Wand nach einem der Ansprüche 9 bis 17 , d a - d u r c h   g e k e n n z e i c h n e t , daß die Hohlkörper, Hohlkugeln oder Rohre (12-16) aus dehnbarem Material bestehen und an einer steuerbaren Druckquelle angeschlossen sind.

19. Wand nach einem der Ansprüche 1 bis 18, d a - d u r c h   g e k e n n z e i c h n e t , daß in den Fluids, Materialien und/oder Körpern, die in den Zwischenräumen sind, chemische oder physikalische Verfahren ablaufen, deren Trennung bzw. Steuerung über die Zwischenräume erfolgt.

20. Wand, insbesondere eines Behälters, nach einem der Ansprüche 1 bis 19, d a d u r c h   g e k e n n - z e i c h n e t , daß ein Zwischenraum (2b, 2d) von einem ersten Fluid durchflossen ist, das dort von den Innenwänden erwärmt oder abgekühlt wird und nach außen fließt, daß in einem ein zweites Fluid enthaltenden Zwischen-oder Innenraum (I) dieses zweite Fluid erwärmt oder abgekühlt wird und daß dieser Zwischen-oder Innenraum (I) mit den übrigen Zwischenräumen (2a, 2c) verbunden ist, in denen sich das zweite Fluid befindet.

21. Wand nach Anspruch 20, d a d u r c h   g e k e n n -

zeichnet , daß der das erste Fluid enthaltende Zwischenraum (2b, 2d) mindestens auf einer der
beiden Seiten vom zweiten Fluid erwärmt bzw. gekühlt
wird.

22. Wand nach Anspruch 20 oder 21, d a d u r c h   g e -
k e n n z e i c h n e t , daß in dem das zweite Fluid
erwärmenden oder kühlenden Zwischen- oder Innenraum
(I) eine Heizvorrichtung oder -element (E) angeordnet
ist.

23. Wand nach einem der Ansprüche 20 bis 22, d a -
d u r c h   g e k e n n z e i c h n e t , daß die
Räume, die als Fluid eine Flüssigkeit enthalten, zusätzlich einen gasförmigen Druckausgleichsraum aufweisen oder damit verbunden sind.

24. Wand nach einem der Ansprüche 20 bis 23, d a -
d u r c h   g e k e n n z e i c h n e t , daß der
das erste Fluid enthaltende Zwischenraum (2b, 2d) mit
dem Kreislauf einer Heizungs-, Warmwasserbereitungs-
oder Kühlungsanlage verbunden ist.

25. Wand nach einem der Ansprüche 20 bis 24, d a -
d u r c h   g e k e n n z e i c h n e t , daß die
Aggregatzustände und/oder Stoffeigenschaften der
Fluida in den Zwischen- oder Innenräumen verändert
und/oder unveränderlich regelbar sind.

0075072

Fig. 1

Fig. 2

Fig. 3

0075072

2/5

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

0075072

Fig. 19

Fig. 20

**Europäisches Patentamt**

**EUROPÄISCHER RECHERCHENBERICHT**

0075072

Nummer der Anmeldung

EP 82 10 4802

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-1 218 206 (BLACKBURN) <br><br> *Ansprüche; Figuren* | 1-5,12 ,13,16 ,17,19 ,22,24 | F 16 J 12/00 <br> B 01 J 3/00 <br> B 01 J 3/04 |
| X | US-A-3 282 459 (WILSON) <br><br> *Spalte 1; Zeile 44 - Spalte 3, Zeile 23; Figuren* | 1-4,12 -15,17 | |
| X | FR-A- 886 815 (DORTMUND-HOERDER) <br><br> *Seite 1, Zeile 15 - Seite 2, Zeile 3; Figuren* | 1-4,12 ,16,17 ,19 | |
| X | FR-A-1 205 978 (CIBA) <br><br> *Seite 2, rechte Spalte, Absatz 3 - Seite 3, rechte Spalte, Absatz 2; Figuren 1-9* | 1,4,5, 9-17, 19,21 | **RECHERCHIERTE SACHGEBIETE (Int. Cl. 3)** <br><br> F 16 J <br> B 01 J |
| X | FR-A-1 549 418 (B.A.S.F.) <br><br> *Seite 3, linke Spalte, Absatz 6 - Seite 4, linke Spalte, Absatz 1; Figuren 1,2* | 1,2,4, 14,17, 19-21, 23,24 | |

--- -/-

Der vorliegende Recherchenbericht wurde für alle Patentansprüche erstellt.

| Recherchenort <br> DEN HAAG | Abschlußdatum der Recherche <br> 07-12-1982 | Prüfer <br> LEGER M.G.M. |
|---|---|---|

Europäisches
Patentamt

**EUROPÄISCHER RECHERCHENBERICHT**

0075072

Nummer der Anmeldung

EP 82 10 4802

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A- 396 286 (REYNAUD) *Ansprüche; Figuren* | 1-4 | |
| X | US-A-3 647 103 (BERMAN) *Spalte 1, Zeile 64 - Spalte 2, Zeile 56; Figuren* | 1-4 | |
| X | GB-A-1 180 063 (WESTERN ELECTRIC) *Seite 1, Zeile 57 - Seite 2, Zeile 19; Figuren 1-3* | 1-4,17 | |
| X | DE-A-2 829 640 (SOLMECKE) *Seite 5, Absatz 1 - Seite 9, Absatz 2; Figuren 1,2* | 1-4,17 ,19 | |
| | | | RECHERCHIERTE SACHGEBIETE (Int. Cl. ³) |

Der vorliegende Recherchenbericht wurde für alle Patentansprüche erstellt.

| Recherchenort DEN HAAG | Abschlußdatum der Recherche 07-12-1982 | Prüfer LEGER M.G.M. |
|---|---|---|